# EUROPÄISCHE PATENTANMELDUNG

(11) **EP 4 804 125 A1**
(43) Veröffentlichungstag der Anmeldung: **09.09.2026**
(21) Anmeldenummer: 25162032.4
(22) Anmeldetag: 06.03.2025
(51) Int. Cl.: G06T 7/62, G06T 7/11, G06T 7/194

(54) **VERFAHREN UND VORRICHTUNG ZUM ERKENNEN EINER ABMESSUNG EINES OBJEKTS**

(71) Anmelder: SICK AG, 79183 Waldkirch (DE)
(72) Erfinder: Herz, Kai, 79183 Waldkirch (DE); Schirrmacher, Franziska, 79183 Waldkirch (DE); Stefan, Werner, 79183 Waldkirch (DE)
(74) Vertreter: Manitz Finsterwald Patent- und Rechtsanwaltspartnerschaft mbB

(57) **Zusammenfassung**

Ein computerimplementiertes Verfahren zum Erkennen einer Abmessung eines ersten Objekts, das in einer Industrieanlage angeordnet ist, umfasst das Erzeugen eines 2D-Bildes und eines Tiefenbildes durch eine Kameravorrichtung der Industrieanlage, wobei das 2D-Bild und das Tiefenbild das erste Objekt und ein zweites Objekt enthalten, das Anwenden eines Instanz-Segmentierungsmodells auf das 2D-Bild, um eine erste Segmentierungsmaske für das erste Objekt und eine zweite Segmentierungsmaske für das zweite Objekt zu generieren, wobei das Instanz-Segmentierungsmodell ein Convolutional Neural Network umfasst, das ein erstes Modul und ein zweites Modul umfasst, die miteinander verknüpft sind, das Erhalten von ersten Tiefeninformationen des ersten Objekts aus dem Tiefenbild unter Verwendung der ersten Segmentierungsmaske; und das Erhalten der Abmessung des ersten Objekts basierend auf den ersten Tiefeninformationen.

## Beschreibung

Die Erfindung betrifft ein computerimplementiertes Verfahren und eine Vorrichtung zum Erkennen zumindest einer Abmessung zumindest eines Objekts, das in einer Industrieanlage angeordnet ist.

Automatische Bilderkennungsverfahren, insbesondere solche bei denen ein künstliches neuronales Netz wie zum Beispiel ein Convolutional Neuronal Network (kurz CNN, deutsch: faltendes neuronales Netzwerk) zum Einsatz kommt, werden in verschiedenen technischen Bereichen eingesetzt. Sie werden beispielsweise verwendet, um die relative Position eines Objekts innerhalb einer Industrieanlage zu bestimmen, um die Abmessungen bzw. Dimensionen eines Objekts zu bestimmen oder um Fehler auf einem Objekt zu erkennen, d.h. zur Qualitätssicherung. Basierend auf den durch die automatische Bilderkennung gewonnenen Informationen wird dann in der Regel ein Teil einer Industrieanlage gesteuert. Die Industrieanlage ist beispielsweise eine Industrieanlage im Logistikbereich (z. B. ein Waren-Verteilzentrum) oder eine Industrieanlage in einer industriellen Fertigungsumgebung.

Für die automatische Vermessung bzw. Dimensionierung einzelner Objekte werden zum Beispiel zuerst Bilder des Objekts unter Verwendung eines oder mehrerer optischer Sensoren der Industrieanlage erzeugt. Die Bilder werden dann in der Regel über eine Datenverbindung einer separaten Datenverarbeitungseinrichtung zugeführt, auf der eine Bilderkennungssoftware ausgeführt wird. Dies hat den Nachteil, dass vergleichsweise große Datenmengen zwischen den Sensoren und der Datenverarbeitungseinrichtung übertragen werden müssen. Außerdem sind bestehende Lösungen in manchen Situationen immer noch fehleranfällig, insbesondere wenn mehrere Objekte gleichzeitig automatisch dimensioniert werden sollen.

Es ist daher eine Aufgabe der Erfindung, das automatische Erkennen und/oder Dimensionieren von Objekten zu verbessern.

Die vorgenannte Aufgabe wird erfindungsgemäß durch die Merkmale der unabhängigen Ansprüche gelöst.

Ein erfindungsgemäßes computerimplementiertes Verfahren zum Erkennen zumindest einer Abmessung zumindest eines ersten Objekts, das in einer Industrieanlage angeordnet ist, umfasst das Erzeugen eines 2D-Bildes und eines Tiefenbildes durch zumindest eine Kameravorrichtung der Industrieanlage.

Die Industrieanlage ist beispielsweise eine Industrieanlage im Logistikbereich. Sie kann aber auch Teil einer industriellen Fertigungsumgebung zum Herstellen von Erzeugnissen sein.

Bei der Abmessung handelt es sich zum Beispiel um eine Höhe, Länge und/oder Breite des Objekts, das heißt um ein das Objekt kennzeichnendes Längenmaß. Daraus können weitere das Objekt kennzeichnende Informationen wie zum Beispiel ein Volumen des Objekts berechnet werden. Zusätzlich oder alternativ zu der Abmessung können aber auch ein oder mehrere Eckpunkte des Objekts, bevorzugt im Kamerakoordinatensystem, und/oder der Verdrehwinkel des Objekts bestimmt (und ausgegeben) werden.

Die Kameravorrichtung umfasst beispielsweise eine oder mehrere, insbesondere zwei, bevorzugt hochauflösende Digitalkameras, die dazu eingerichtet sind, das 2D-Bild und das Tiefenbild zu erzeugen. Bevorzugt ist die Kameravorrichtung eine RGBD-Kamera (Rot-Grün-Blau-Tiefenkamera), die dazu eingerichtet ist, ein RGBD-Bild (Rot-Grün-Blau-Tiefenbild) zu erzeugen und das 2D-Bild und das Tiefenbild aus dem RGBD-Bild zu extrahieren. Die Kameravorrichtung arbeitet bevorzugt auf dem Stereo-Vision-Prinzip oder als LiDAR. Die Kameravorrichtung kann aber auch dazu eingerichtet sein, das 2D-Bild und das Tiefenbild jeweils einzeln, d.h. mit separaten Sensoren, zu erzeugen.

Die Kameravorrichtung umfasst bevorzugt einen Speicher und einen Prozessor, wobei der Speicher dazu eingerichtet ist, computerausführbare Anweisungen zu speichern, die, wenn sie von dem Prozessor ausgeführt werden, den Prozessor dazu veranlassen, zumindest eines Teils des erfindungsgemäßen Verfahrens auszuführen. Es kann aber auch vorgesehen sein, dass zumindest ein Teil des erfindungsgemäßen Verfahrens auf einem externen Speicher vorgehalten und/oder durch einen externen Prozessor ausgeführt wird.

Die Kameravorrichtung kann ein Bestandteil einer erfindungsgemäßen Vorrichtung zum Erkennen zumindest einer Abmessung zumindest eines ersten Objekts, das in einer Industrieanlage angeordnet ist, sein, die weiter unten beschrieben wird.

Das 2D-Bild kann ein Schwarz-Weiß-Bild, ein Graustufenbild und/oder ein Farbbild, insbesondere ein RGB-Bild (Rot-Grün-Blau-Bild), sein.

Jedes Pixel im Tiefenbild enthält bevorzugt einen Wert, der die Entfernung (Tiefeninformation) des Objekts oder eines Teils oder Bereichs des Objekts von der Kameravorrichtung, insbesondere einem Bildsensor der Kameravorrichtung, angibt.

Das 2D-Bild und das Tiefenbild enthalten das erste Objekt und zumindest ein zweites Objekt. Je nach Anwendungsfall können das 2D-Bild und das Tiefenbild aber auch drei oder mehr Objekte enthalten.

Das Verfahren umfasst ferner das Anwenden eines Instanz-Segmentierungsmodells auf das 2D-Bild, um eine erste Segmentierungsmaske für das erste Objekt und eine zweite Segmentierungsmaske für das zweite Objekt zu generieren. Bevorzugt ist die erste und/oder zweite Segmentierungsmaske eine binäre Segmentierungsmaske. Beispielsweise kennzeichnet der Pixelwert 1 in der Segmentierungsmaske das erste und/oder zweite Objekt und der Pixelwert 0 den Hintergrund oder einen nicht relevanten Bildbereich im 2D-Bild. Es können aber auch verschiedene Pixelwerte für das erste und zweite Objekt verwendet werden.

Insbesondere ist der ersten und/oder zweiten Segmentierungsmaske ein Label zugeordnet, das einen Objekttyp des ersten und/oder zweiten Objekts angibt. Das heißt das Instanz-Segmentierungsmodell kann bevorzugt erkennen, um welches Objekt es sich handelt.

Das Instanz-Segmentierungsmodell umfasst zumindest ein Convolutional Neural Network (kurz CNN), das zumindest ein erstes Modul und ein zweites Modul umfasst, die miteinander verknüpft sind. Das Instanz-Segmentierungsmodell kann auch zwei oder mehr Convolutional Neural Networks umfassen, die gleich oder unterschiedlich zu dem zumindest einen Convolutional Neural Network ausgestaltet sind und bevorzugt miteinander verknüpft sind.

Das Verfahren umfasst des Weiteren das Erhalten zumindest von ersten Tiefeninformationen des ersten Objekts aus dem Tiefenbild unter Verwendung der ersten Segmentierungsmaske, und das Erhalten der Abmessung des ersten Objekts basierend auf den ersten Tiefeninformationen. Bevorzugt enthalten die ersten Tiefeninformationen das im Tiefenbild segmentierte erste Objekt.

Das heißt erfindungsgemäß wird durch das Anwenden des Instanz-Segmentierungsmodells nicht nur zwischen Hintergrund und Objekt, sondern auch zwischen einzelnen Objekten unterschieden. Dies ermöglicht eine schnelle und zuverlässige automatische Bestimmung der Abmessungen von Objekten. Insbesondere kann effektiv verhindert werden, dass nahe nebeneinander oder ineinander angeordnete Objekte als ein einziges Objekt detektiert werden. Beispielsweise ist es möglich, Objekte in Behältern direkt zu dimensionieren, und zwar selbst dann, wenn das Objekt und der Behälter in etwa gleich hoch sind. Zudem ist es möglich, eng nebeneinander oder sich berührende Objekte einzeln zu erkennen und/oder zu dimensionieren, und zwar auch hier selbst dann, wenn es sich um mehrere gleiche Objekte handelt bzw. wenn die Objekte in etwa gleich hoch sind.

Vorteilhafte Ausführungsformen der Erfindung sind in den abhängigen Ansprüchen, der Beschreibung sowie der Zeichnung angegeben.

Gemäß einer Ausführungsform sind das erste Objekt und das zweite Objekt nebeneinander angeordnet. Insbesondere berühren sich das erste Objekt und das zweite Objekt, beispielsweise an einer jeweiligen Seitenfläche. Alternativ ist das erste Objekt zumindest teilweise, bevorzugt vollständig, in dem zweiten Objekt angeordnet.

Gemäß einer Ausführungsform umfasst das erste Objekt und/oder das zweite Objekt ein (industrielles und/oder Einzelhandels-) Erzeugnis, ein Paket und/oder einen Behälter. Zum Beispiel sind das erste Objekt und das zweite Objekt zwei nebeneinander angeordnete, insbesondere zwei sich berührende, Pakete oder Erzeugnisse. Das erste Objekt kann aber auch ein Erzeugnis oder Paket sein, und das zweite Objekt kann ein Behälter sein, in dem das erste Objekt angeordnet ist. Der Behälter ist bevorzugt auf einer der Kameravorrichtung zugewandten Seite offen.

Gemäß einer Ausführungsform sind das erste Objekt und das zweite Objekt gleich hoch, breit und/oder lang. Beispielsweise sind das erste Objekt und das zweite Objekt identische Objekte. Es kann sich aber auch um unterschiedliche Objekte handeln, die die selbe Länge, Breite und/oder Höhe aufweisen.

Gemäß einer Ausführungsform sind das erste Objekt und das zweite Objekt auf einer Einrichtung zum Bewegen des ersten und zweiten Objekts (z. B. ein Förderband, eine Förderschiene und/oder mehrere nebeneinander drehbar gelagerte Förderrollen) der Industrieanlage angeordnet, und das 2D-Bild und das Tiefenbild werden erzeugt, wenn das erste Objekt und das zweite Objekt zwischen der Einrichtung zum Bewegen des ersten und zweiten Objekts und der Kameravorrichtung angeordnet sind.

Gemäß einer Ausführungsform umfasst das Verfahren ferner das Erhalten von zweiten Tiefeninformationen des zweiten Objekts aus dem Tiefenbild unter Verwendung der zweiten Segmentierungsmaske, und das Erhalten der Abmessung des zweiten Objekts basierend auf den zweiten Tiefeninformationen. Bevorzugt enthalten die zweiten Tiefeninformationen das im Tiefenbild segmentierte zweite Objekt. Diese Vorgehensweise stellt eine besonders zuverlässige Bestimmung der Objektabmessungen sicher, wenn es sich beispielsweise um zwei nebeneinander angeordnete Objekte handelt (insbesondere wenn diese in etwa gleich hoch sind und/oder sich berühren). Falls es sich jedoch beispielsweise um ein Paket oder Erzeugnis in einem Behälter handelt, kann es ausreichend sein, nur die ersten Tiefeninformationen zu Erhalten.

Gemäß einer Ausführungsform umfasst das Verfahren ferner das Extrahieren einer ersten Punktwolke des ersten Objekts aus dem Tiefenbild basierend auf den ersten Tiefeninformationen, und das Erhalten der Abmessung des ersten Objekts aus der ersten Punktwolke.

Gemäß einer Ausführungsform umfasst das Verfahren ferner das Extrahieren einer zweiten Punktwolke des zweiten Objekts aus dem Tiefenbild basierend auf den zweiten Tiefeninformationen, und das Erhalten der Abmessung des zweiten Objekts aus der zweiten Punktwolke.

Die erste und/oder zweite Punktwolke ist bevorzugt eine 3D-Punktwolke.

Das Erhalten der Abmessung des ersten Objekts aus der ersten Punktwolke, und insbesondere das Erhalten der Abmessung des zweiten Objekts aus der zweiten Punktwolke, kann durch Anwenden eines angepassten Dimensionierungsalgorithmus auf die erste Punktwolke, und insbesondere auf die zweite Punktwolke, erfolgen.

Gemäß einer Ausführungsform erfolgt das Anwenden des Instanz-Segmentierungsmodells auf das 2D-Bild, das Erhalten der ersten Tiefeninformationen des ersten Objekts aus dem Tiefenbild, insbesondere das Erhalten der zweiten Tiefeninformationen des zweiten Objekts aus dem Tiefenbild, insbesondere das Extrahieren der ersten Punktwolke des ersten Objekts aus dem Tiefenbild, insbesondere das Extrahieren der zweiten Punktwolke des zweiten Objekts aus dem Tiefenbild, das Erhalten der Abmessung des ersten Objekts basierend auf den ersten Tiefeninformationen, insbesondere das Erhalten der Abmessung des ersten Objekts aus der ersten Punktwolke, insbesondere das Erhalten der Abmessung des zweiten Objekts basierend auf den zweiten Tiefeninformationen, und/oder insbesondere das Erhalten der Abmessung des zweiten Objekts aus der zweiten Punktwolke, durch die Kameravorrichtung der Industrieanlage.

Mit anderen Worten kann das erfindungsgemäße Verfahren zur automatischen Bestimmung der Abmessungen zumindest eines Objekts zumindest teilweise, bevorzugt vollständig durch die Hardware der Kameravorrichtung ausgeführt werden, und zwar innerhalb eines Zeitraums, der sich für Anwendungen im industriellen Maßstab eignet. Zu diesem Zweck kann die Hardware der Kameravorrichtung und/oder das Instanz-Segmentierungsmodell speziell an die jeweiligen Anforderungen angepasst sein. Beispielsweise kann die Hardware der Kameravorrichtung ein für die Ausführung von Convolutional Neural Networks ausgebildetes ASIC (Application Specific Integrated Circuit) oder FPGA (Field Programmable Gate Array) umfassen. Die Hardware der Kamera kann insbesondere diejenigen Komponenten bezeichnen, die innerhalb des Gehäuses der Kamera angeordnet sind (und z. B. nicht erst durch eine an dem Gehäuse der Kamera angeschlossene und nach extern führende Datenleitung übertragen werden müssen).

Zumindest ein Teil oder alle der zuvor genannten Verfahrensschritte kann aber auch durch eine in Bezug auf die Kameravorrichtung externe Datenverarbeitungseinrichtung erfolgen, die in Kommunikation mit der Kameravorrichtung steht. Die externe Datenverarbeitungseinrichtung kann ein Teil der Industrieanlage sein oder eine in Bezug auf die Industrieanlage externe Einrichtung sein, beispielsweise ein Cloud-Server.

Gemäß einer Ausführungsform extrahiert das erste Modul eine Mehrzahl von Merkmalskarten (engl.: "Feature Maps") mit unterschiedlichen Detailgraden aus dem 2D-Bild, insbesondere unter Verwendung einer Mehrzahl von Faltungsfiltern.

Gemäß einer Ausführungsform kombiniert das zweite Modul die Mehrzahl von Merkmalskarten, um kombinierte Objektinformationen zu generieren.

Gemäß einer Ausführungsform umfasst das Instanz-Segmentierungsmodell, insbesondere das zumindest eine Convolutional Neuronal Network, ferner ein drittes Modul, das mit dem ersten Modul und dem zweiten Modul verknüpft ist, wobei das dritte Modul die erste Segmentierungsmaske und die zweite Segmentierungsmaske basierend auf der Mehrzahl von Merkmalskarten und den kombinierten Objektinformationen generiert.

Gemäß einer Ausführungsform umfasst das Instanz-Segmentierungsmodell ein RTMDet-Modell (engl.: "Real-Time Model for object Detection"), wobei das erste Modul der Backbone-Teil des RTMDet-Modells ist, das zweite Modul der Neck-Teil des RTMDet-Modells ist, und das dritte Modul der Head-Teil des RTMDet-Modells ist. Das RTMDet-Modell arbeitet besonders zuverlässig und kann an den jeweiligen Anwendungsfall angepasst werden.

Gemäß einer Ausführungsform umfasst das erste, zweite und/oder dritte Modul mehrere Schichten, die in einer hierarchischen Struktur angeordnet sind. Die Schichten des ersten, zweiten und/oder dritten Moduls können (der Reihenfolge nach) eine Eingabeschicht, eine oder mehrere Faltungsschichten (engl.: "Convolutional Layers"), eine oder mehrere Aktivierungsfunktionen, eine oder mehrere Pooling-Schichten, eine oder mehrere vollständig verbundene Schichten (engl.: "Fully Connected Layers") und/oder eine Ausgabeschicht umfassen.

Die Eingabeschicht kann bevorzugt Eingabedaten wie zum Beispiel ein Pixelarray erhalten, diese in eine feste Größe skalieren und in die Faltungsschichten einspeisen. Bevorzugt erhält die Eingabeschicht des ersten Moduls das 2D-Bild, bevorzugt mit einer Auflösung von 416x416 Pixel oder weniger. Dies verkürzt die Verarbeitungszeit und spart Rechenressourcen.

Die Faltungsschichten verwenden bevorzugt (Faltungs-)Filter (auch als Kernels bezeichnet), um die von der Eingabeschicht erhaltenen Eingabedaten mit einer bestimmten Größe und Anzahl zu falten. Die Filter können kleine trainierbare Gewichtsmatrizen sein (z. B. 3x3 oder 5x5), die dazu verwendet werden, Merkmale wie Kanten, Texturen oder andere Bildstrukturen zu extrahieren. Bei jeder Faltung kann das Bild durch das Filter verschoben werden, und eine Faltung durchgeführt werden, die zu einer Merkmalskarte (engl. "Feature Map") führt. Bevorzugt umfasst das zweite Modul, insbesondere und/oder das dritte Modul, 48, 96 und/oder 192 Feature Channels, wobei insbesondere die Anzahl an Feature Channels die Anzahl an angewandten Filtern angibt. Dadurch kann der Rechenaufwand erheblich reduziert werden.

Insbesondere enthält der Neck-Teil drei verschiedene Feature Maps (Merkmalskarten) aus dem Backbone-Teil. Die 3 Werte 48, 96, und 192 können also der Anzahl der Channels für diese 3 Merkmalskarten entsprechen. Je höher die Anzahl der Channels, desto detaillierte die Informationen. Das heißt die die Merkmalskarte mit 48 Channels kann grobe Informationen über das Objekt enthalten, während die Merkmalskarte mit 192 Channels Informationen über kleine Details über das Objektes enthalten kann. Man spricht hier also von einer sog. "Feature Pyramide". Ziel des Neck-Teils ist es, die Informationen aus diesen drei Bildern so zu kombinieren, dass das Objekt möglichst genau erkannt und identifiziert werden zu kann.

Nach jeder Faltungsschicht wird bevorzugt eine Aktivierungsfunktion angewendet, um die nichtlinearen Beziehungen zwischen den Eingabedaten und den gefilterten Merkmalen oder Features zu modellieren. Bevorzugt wird die ReLU-Funktion (engl.: "Rectified Linear Unit") verwendet, da sie eine schnelle Berechnung ermöglicht. Es kann aber auch eine Sigmoid-Weighted Linear Unit angewandt werden.

Nach den Faltungsschichten folgen bevorzugt eine oder mehrere Pooling-Schichten, welche die Dimension der Feature Maps reduzieren, um die Berechnungen zu vereinfachen und die räumliche Invarianz weiter zu verbessern. Bevorzugt wird eine Pooling-Operationen wie zum Beispiel Max-Pooling und/oder Average-Pooling angewandt. Max-Pooling extrahiert das Maximum innerhalb eines lokalen Bereichs der Eingabedaten, während Average-Pooling den Mittelwert der Eingabedaten in diesem Bereich berechnet.

Nach den mehreren Faltungs- und Pooling-Schichten folgen bevorzugt eine oder mehrere vollständig verbundene Schichten. In diesen Schichten werden bevorzugt die hochdimensionalen Merkmale, die durch die vorherigen Schichten extrahiert wurden, zu einer flachen Struktur transformiert. Jedes Neuron der vollständig verbundenen Schicht ist bevorzugt mit jedem Neuron der vorherigen Schicht verbunden. Diese Schichten dienen dazu, die extrahierten Merkmale zu kombinieren und eine endgültige Vorhersage oder Klassifikation zu treffen.

Die Ausgabeschicht liefert bevorzugt das Ergebnis des CNN. Beispielsweise wird eine Softmax-Aktivierungsfunktion angewandt, um eine Wahrscheinlichkeitsverteilung zu erzeugen.

Gemäß einer Ausführungsform umfasst das Verfahren ferner das Trainieren des Instanz-Segmentierungsmodells mit einem Trainingsdatensatz, der eine Mehrzahl von Bildern, insbesondere eine Mehrzahl von RGB-Bildern, umfasst, die mit der Kameravorrichtung der Industrieanlage und/oder mit einer in Bezug auf die Kameravorrichtung der Industrieanlage im Wesentlichen baugleiche Kameravorrichtung erzeugt wurden. Der Trainingsdatensatz umfasst bevorzugt mehr als fünftausend Bilder, bevorzugt mit bekanntem Inhalt. Es kann sich also um "gelabelte" Trainingsdaten handeln. Das Training kann insbesondere ein "supervised learning" sein. Durch das Trainieren mit dem Trainingsdatensatz kann das Modell speziell auf den jeweiligen Anwendungsfall angepasst werden.

Das Training kann in jedem Schritt für das gesamte Modell (End-To-End) erfolgen. Hierfür können die Trainingsdaten als Input für das Modell genutzt werden, um daraus Segmentierungsmasken zu erzeugen. Diese erzeugten Masken können dann mit den "Ground Truth" Daten verglichen werden. Hierbei kann es sich um die Masken von Objekten, die von Hand eingezeichnet wurden, handeln. Der Vergleich des aktuellen Modell-Ergebnisses mit der "Ground Truth" kann über eine "Loss Function" (Verlustfunktion) erfolgen. Je höher die Übereinstimmung der Masken, desto geringer ist der Rückgabewert der Verlustfunktion. Ziel des Trainings ist es also, das Modell so zu parametrieren, dass die Verlustfunktion möglichst gering wird. Bei jedem Trainingsschritt können alle Trainingsdaten verwendet und alle Modellparameter angepasst werden. Das Training kann beendet sein, sobald eine bestimmte Anzahl an Iterationen erreicht oder ein Schwellwert für die Verlustfunktion unterschritten wird.

Bevorzugt umfasst das Trainieren des Instanz-Segmentierungsmodells das Optimieren des ersten, zweiten und/oder dritten Moduls. Dies erfolgt bevorzugt mittels eines iterativen überwachten Lernverfahrens, insbesondere unter Verwendung des Backpropagation-Algorithmus.

Zur Vermeidung von Überanpassung (engl.: "Overfitting") werden bevorzugt Regularisierungstechniken wie Dropout oder L2-Regularisierung eingesetzt. Dropout reduziert die Komplexität des Modells, indem es während des Trainings zufällig Neuronen deaktiviert, während L2-Regularisierung die Größe der Gewichtsmatrizen einschränkt, um zu große Gewichtswerte zu vermeiden.

Gemäß einer Ausführungsform umfasst das Verfahren ferner das Vor-Trainieren des Instanz-Segmentierungsmodells mit einem frei erhältlichen Datensatz, der eine Mehrzahl von RGB-Bilder umfasst. Der Trainingsdatensatz umfasst bevorzugt mehr als vierzigtausend RGB-Bilder. Auch das Vor-Trainieren kann bevorzugt ein supervised learning umfassen.

Gemäß einer Ausführungsform enthalten die Bilder des Trainingsdatensatzes zumindest ein Paket und/oder zumindest ein Erzeugnis, das zumindest teilweise, bevorzugt vollständig, in zumindest einem Behälter angeordnet ist, wobei das Paket und/oder das Erzeugnis und der Behälter bevorzugt die gleiche Höhe aufweisen. Insbesondere enthält der Trainingsdatensatz Labels und/oder Masken zumindest für die Kategorien "Objekt" und "Behälter". In diesem Fall kann das Instanz-Segmentierungsmodell speziell zum Bestimmen der Abmessungen von Objekten in Behältern ausgelegt werden.

Gemäß einer Ausführungsform enthalten die Bilder des Trainingsdatensatzes zwei oder mehr Pakete und/oder zwei oder mehr Erzeugnisse, die nebeneinander angeordnet sind, wobei die nebeneinander angeordneten Pakete und/oder Erzeugnisse bevorzugt die gleiche Höhe aufweisen. Die nebeneinander angeordneten Pakete und/oder Erzeugnisse können sich berühren, teilweise überlappen und/oder identisch sein. In diesem Fall kann das Instanz-Segmentierungsmodell speziell zum Bestimmen der Abmessungen von Objekten ausgelegt werden, die nahe nebeneinander angeordnet sind und/oder die gleiche Höhe aufweisen.

Gemäß einer Ausführungsform enthalten die Bilder des Trainingsdatensatzes zwei oder mehr Pakete und/oder zwei oder mehr Erzeugnisse, die eine zumindest semitransparente und/oder reflektierende Oberfläche aufweisen. In diesem Fall kann das Instanz-Segmentierungsmodell speziell zum Bestimmen der Abmessungen von Objekten ausgelegt werden, deren Ränder oder Kanten schwer zu erfassen sind.

Es versteht sich, dass der Trainingsdatensatz je nach Anwendungsfall alle oder nur einen Teil der zuvor genannten Arten von Bildern enthalten kann.

Gemäß einer Ausführungsform ist der Trainingsdatensatz durch einen Datenerweiterungsprozess vergrößert, wobei der Datenerweiterungsprozess beinhaltet, dass eines oder mehrere der folgenden Bildbearbeitungsprozesse auf zumindest eines, einen Teil oder alle der Kombinationsbilder des Trainingsdatensatzes angewandt werden: Ändern der Helligkeit des Bildes Hinzufügen von Rauschen zu dem Bild, Drehen und/oder Spiegeln des Bildes, Ausschneiden eines Teils eines Bildes und Hinzufügen des Teils zu einem anderen Bild. Dadurch stehen mehr Bilder zum Trainieren des Modells zur Verfügung, wodurch das Modell robuster und weniger fehleranfällig gemacht werden kann.

Gemäß einer Ausführungsform erzeugt die Kameravorrichtung das 2D-Bild und das Tiefenbild dadurch, dass sie ein Kombinationsbild, insbesondere ein RGBD-Bild, aufnimmt, insbesondere mit einem einzigen Schnappschuss, und das 2D-Bild und das Tiefenbild aus dem Kombinationsbild, insbesondere aus dem RGBD-Bild, extrahiert. Diese hat den Vorteil, dass nur eine Kameravorrichtung eingesetzt werden muss.

Gemäß einer Ausführungsform umfasst das Verfahren ferner das Steuern zumindest eines Teils der Industrieanlage basierend auf der Abmessung des ersten Objekts, insbesondere basierend auf der Abmessung des ersten Objekts und der Abmessung des zweiten Objekts. Beispielsweise wird basierend auf zumindest der Abmessung des ersten Objekts eine Einrichtung zum Bearbeiten des ersten und/oder zweiten Objekts wie zum Beispiel ein Teil einer Werkzeugmaschine der Industrieanlage, und/oder eine Einrichtung zum Bewegen des ersten und/oder zweiten Objekts wie z. B. ein Förderband, ein autonomer Transportroboter und/oder ein Greifarm der Industrieanlage gesteuert. Dadurch, dass erfindungsgemäß die Abmessung zumindest des ersten Objekts besonders schnell und zuverlässig bestimmt werden kann, kann auch die Industrieanlage besonders schnell und fehlerfrei gesteuert werden.

Eine Vorrichtung zum Erkennen zumindest einer Abmessung zumindest eines ersten Objekts, das in einer Industrieanlage angeordnet ist, insbesondere in einer Industrieanlage im Logistikbereich, ist dazu eingerichtet und ausgebildet, ein 2D-Bild und ein Tiefenbild durch zumindest eine Kameravorrichtung der Vorrichtung zu erzeugen, wobei das 2D-Bild und das Tiefenbild das erste Objekt und zumindest ein zweites Objekt enthalten, ein Instanz-Segmentierungsmodell auf das 2D-Bild anzuwenden, um eine erste Segmentierungsmaske für das erste Objekt und eine zweite Segmentierungsmaske für das zweite Objekt zu generieren, zumindest erste Tiefeninformationen des ersten Objekts aus dem Tiefenbild unter Verwendung der ersten Segmentierungsmaske zu erhalten, und die Abmessung des ersten Objekts basierend auf den ersten Tiefeninformationen zu erhalten.

Gemäß einer Ausführungsform umfasst die Kameravorrichtung der Vorrichtung einen Speicher und einen Prozessor, wobei der Speicher Anweisungen enthält, die, wenn sie von dem Prozessor ausgeführt werden, den Prozessor dazu veranlassen, zumindest einen Teil der Schritte des zuvor beschriebenen Verfahrens auszuführen.

Die erfindungsgemäße Vorrichtung ermöglicht ein schnelles und zuverlässiges Bestimmen der Abmessungen von Objekten, und zwar selbst dann, wenn sich die Objekte berühren oder sehr nahe nebeneinander angeordnet sind, im Wesentlichen gleich hoch sind und/oder sich zumindest eines der Objekte in einem Behälter befindet.

Die in Bezug auf das erfindungsgemäße Verfahren beschriebenen Merkmale und deren Vorteile sind auf die Vorrichtung übertragbar.

Nachfolgend wird die Erfindung beispielhaft unter Bezugnahme auf die Zeichnung beschrieben. Es zeigen:
- Fig. 1: eine schematische Darstellung eines Verfahrens zum Bestimmen der Abmessung eines Objekts gemäß dem Stand der Technik;
- Fig. 2: ein Flussdiagramm eines erfindungsgemäßen Verfahrens zum Erkennen einer Abmessung zumindest eines Objekts;
- Fig. 3 und 4: schematische Darstellungen des Verfahrens gemäß Fig. 1; und
- Fig. 5: eine stark vereinfachte schematische Darstellung einer erfindungsgemäßen Vorrichtung zum Erkennen der Abmessung zumindest eines Objekts.

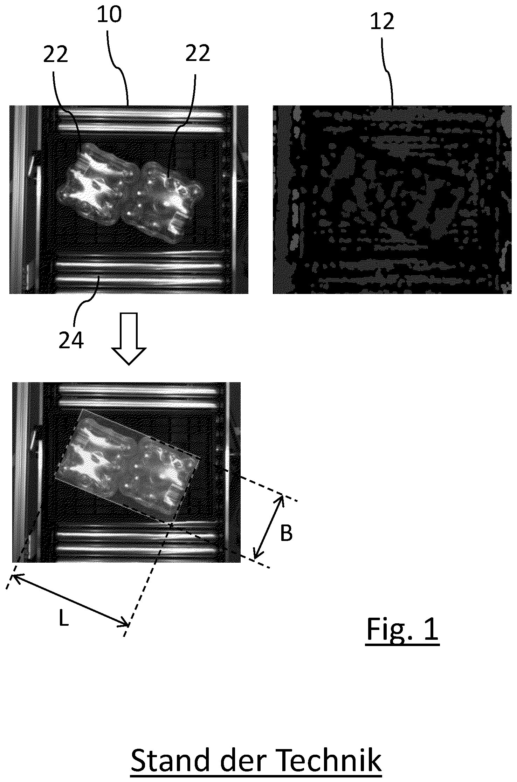

Fig. 1 zeigt eine schematische Darstellung eines herkömmlichen Verfahrens zum Bestimmen der Abmessungen von Objekten. Das Verfahren beginnt damit, dass ein 2D-Bild 10 und ein Tiefenbild 12 durch einen oder mehrere nicht gezeigte Bildsensoren erzeugt werden. In dem gezeigten Beispiel enthalten die Bilder 10, 12 jeweils zwei Objekte 22 oder Erzeugnisse auf einem Förderband 24 bzw. Förderrollen 24.

In dem Tiefenbild 12 wird dann zwischen dem Hintergrund und den Objekten 22 unterscheiden. Dies erfolgt entweder konventionell oder Kl-basiert, beispielsweise unter Anwendung eines Höhenschwellenwerts. Da die Objekte 22 identisch und daher in etwa gleich hoch sind und nahe nebeneinander angeordnet sind, werden die Objekte 22 als ein einziges Objekt und nicht korrekterweise als zwei separate Objekte erkannt. Dies führt zur Bestimmung falscher Abmessungen 20, insbesondere einer zu großen Länge L und Breite B.

Dieselbe Problematik stellt sich beispielsweise auch dann, wenn ein Objekt 22 in einem nach oben hin offenen Behälter angeordnet ist (nicht gezeigt). Hier kann es vorkommen, dass das Objekt 22 und der Behälter als ein Objekt detektiert werden, insbesondere dann, wenn und das Objekt 22 und der Behälter im Wesentlichen die gleiche Höhe aufweisen.

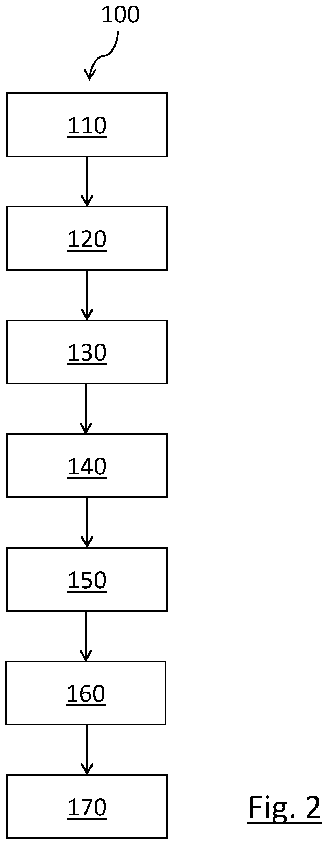

Erfindungsgemäß werden diese Probleme gelöst, indem anstatt der einfachen Unterscheidung zwischen Hintergrund und Objekt 22 ein an den jeweiligen Anwendungsfall angepasstes Instanz-Segmentierungsmodell 14 angewandt wird, wie nachfolgend unter Bezugnahme auf die Fig. 2-4 näher erläutert wird.

Instanz-Segmentierungsmodelle zählen zu den Deep-Learning-Modellen. Diese gelten aufgrund ihres komplexen, vielschichtigen Aufbaus als erheblich rechenintensiver als einfache Machine-Learning-Modelle, welche in der Regel ein CNN mit nur einem einzigen Modul zum Ausführen einer speziellen Aufgabe (wie zum Beispiel das unterscheiden zwischen Objekt und Hintergrund in einem Tiefenbild) umfassen. Überraschenderweise wurde festgestellt, dass trotz der beschränkten Rechenkapazitäten Instanz-Segmentierungsmodelle bei geschickter Modifizierung des Inputs, des Backbone-Moduls, des Neck-Moduls und/oder des Head-Moduls auf einer Kameravorrichtung einer Industrieanlage ausgeführt werden können, und zwar insbesondere ausreichend schnell für die jeweilige industrielle Anwendung.

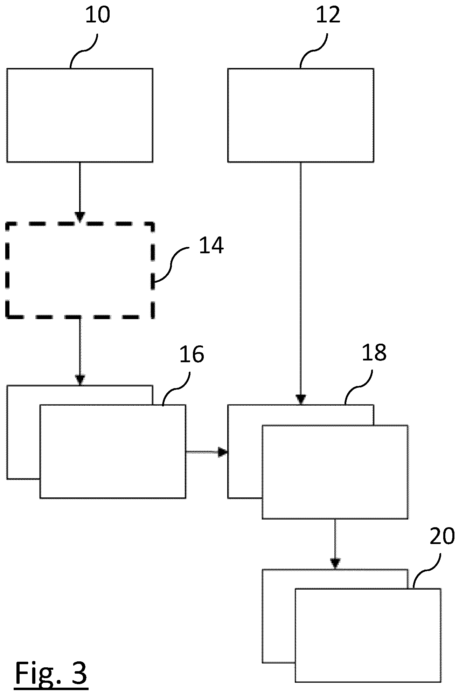

Fig. 2 zeigt ein erfindungsgemäßes Verfahren 100 zum Erkennen einer Abmessung 20 zumindest eines Objekts 22, bei dem ein solches Instanz-Segmentierungsmodell 14 zum Einsatz kommt. Das Verfahren 100 beginnt bei Schritt 110, bei dem das Instanz-Segmentierungsmodell 14 (siehe Fig. 3) mit einem Trainingsdatensatz trainiert wird. Der Trainingsdatensatz enthält Bilder, bevorzugt RGB-Bilder, die speziell für den jeweiligen Anwendungsfall ausgewählt sind.

Sollen beispielsweise überwiegend Objekte in Behältern automatisch dimensioniert werden, enthält der Trainingsdatensatz Bilder, die zumindest überwiegend Objekte in Behältern enthalten. Sollen hingegen gezielt sehr nahe nebeneinander angeordnete oder sich berührende Objekte automatisch dimensioniert werden, enthält der Trainingsdatensatz Bilder, die zumindest überwiegend sich berührende Objekte oder nahe nebeneinander positionierte Objekte enthalten. Es versteht sich, dass der Trainingsdatensatz auch eine Mischung dieser Bilder enthalten kann, was das Modell vielseitiger macht.

Der Trainingsdatensatz enthält Bilder, die durch dieselbe oder eine baugleiche Kameravorrichtung erzeugt wurden, auf der auch das trainierte Instanz-Segmentierungsmodell 14 ausgeführt werden soll. Es kann sich aber auch um Bilder handeln, die von einer ähnlichen Kameravorrichtung erzeugt wurden.

Das Anpassen der Module des Instanz-Segmentierungsmodells 14 erfolgt durch Anwenden eines Backpropagation-Algorithmus.

Um den zur Verfügung stehenden Pool an Trainingsdaten zu vergrößern, ist der Trainingsdatensatz durch einen Datenerweiterungsprozess erweitert.

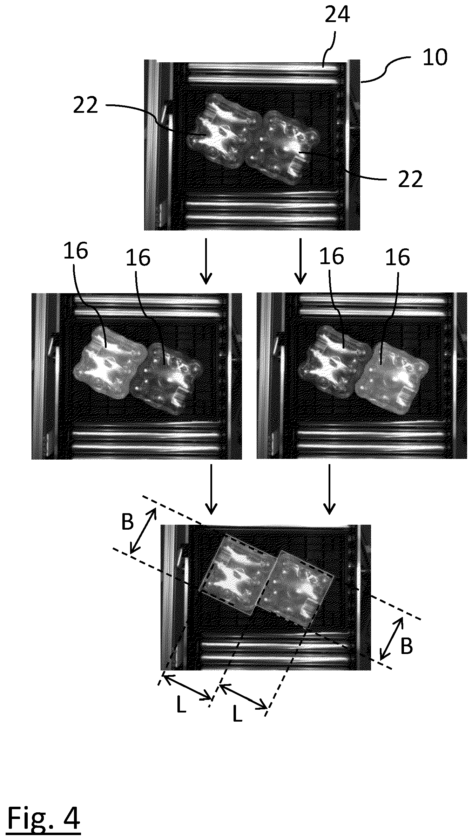

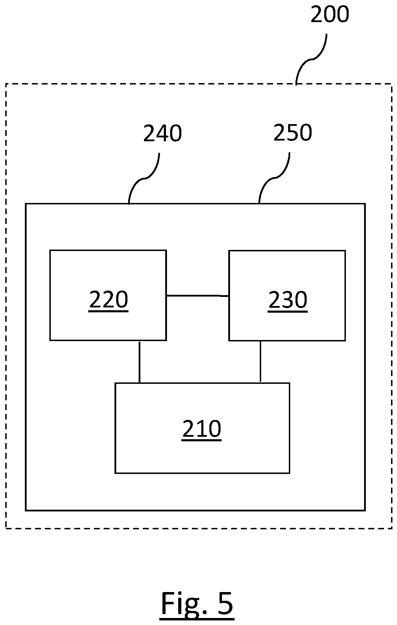

Nach dem Trainieren des Instanz-Segmentierungsmodells 14 werden bei Schritt 120 ein 2D-Bild 10 und ein Tiefenbild 12 (siehe Fig. 3) durch eine Kameravorrichtung 240 einer Industrieanlage (siehe Fig. 5) erzeugt. Das 2D-Bild 10 und das Tiefenbild 12 werden beispielsweise aus einem RGBD-Bild extrahiert, das durch die Kameravorrichtung 240 mit nur einem Schnappschuss aufgenommen wurde. Wie beispielhaft im oberen Teil von Fig. 4 dargestellt ist, enthält das 2D-Bild 10 zwei nahe nebeneinander angeordnete, identische Objekte 22. Je nach Anwendungsfall können die Bilder 10, 12 aber auch ein oder mehrere Objekte 22 in einem Behälter enthalten (nicht gezeigt), und/oder es werden mehr als zwei Objekte 22 erfasst (ebenfalls nicht gezeigt).

Bei Schritt 130 wird das trainierte Instanz-Segmentierungsmodell 14 auf das 2D-Bild 10 angewandt, um für jedes der Objekte 22 eine separate Segmentierungsmaske 16 zu generieren (siehe Fig. 3 sowie mittlerer Teil von Fig. 4).

Das Instanz-Segmentierungsmodell 14 ist ein RTMDet-Modell, das einen Backbone-Teil, einen Neck-Teil und einen Head-Teil umfasst.

Der Input für den Backbone-Teil, insbesondere die Auflösung, mit der der Backbone-Teil das 2D-Bild 10 erhält, die Anzahl an Feature Channels des Neck-Teils und/oder des Head-Teils, und/oder die Aktivierungsfunktion des Backbone-Teils, des Neck-Teils und/oder des Head-Teils, sind bedarfsgerecht an den jeweiligen Anwendungsfalls angepasst. Beispielsweise erhält der Backbone-Teil das 2D-Bild 10 mit einer Auflösung von 416x416 Pixel, die Aktivierungsfunktion des Backbone-Teils, des Neck-Teils und/oder des Head-Teils ist eine Rectified Linear Unit, der Neck-Teil umfasst 48, 96 oder 192 Feature Channels, und/oder der Head-Teil umfasst 48 Feature Channels. Mit dieser Architektur des Instanz-Segmentierungsmodells 14 kann die für das Verfahren 100 benötigte Rechenzeit auf der Kameravorrichtung 240 erheblich reduziert werden. Gleichzeitig ist eine ausreichend genaue und zuverlässige Dimensionierung von Objekten möglich.

Der Backbone-Teil extrahiert eine Mehrzahl von Merkmalen mit immer feiner werdenden Details aus dem 2D-Bild 10. Der Neck-Teil erhält die Merkmale jeder Schicht des Backbones, verarbeitet sie weiter und kombiniert sie. Der Neck-Teil stell daher sicher, dass die Objekte 22 korrekt detektiert werden. Der Head-Teil verarbeitet die von dem Backbone-Teil und dem Neck-Teil extrahierten Merkmale, um finale Bounding Boxen sowie die Segmentierungsmasken 16 zu erzeugen.

Bei Schritt 140 werden die Segmentierungsmasken 16 verwendet, um die einzelnen Objekte 22 in dem Tiefenbild 12 zu segmentieren. Falls es sich um ein Objekt 22 in einem Behälter handelt, kann die Maske des Behälters außer Acht gelassen werden, das heißt es wird nur das Objekt 22 im Behälter im Tiefenbild 12 segmentiert. Falls es sich jedoch, wie in Fig. 4 dargestellt, um zwei nebeneinander angeordnete Erzeugnisse oder Pakete handelt, wird jedes der Objekte 22 mit der entsprechenden Segmentierungsmaske 16 im Tiefenbild 12 segmentiert.

Bei Schritt 150 wird für jedes segmentierte Objekt 22 eine 3D-Punktwolke 18 extrahiert (siehe Fig. 3).

Bei Schritt 160 werden die Abmessungen 20 jedes Objekts 22 aus den jeweiligen Punktwolken 18 bestimmt. Beispielsweise werden die Höhe, die Länge L und/oder die Breite B eines jeden Objekts 22 erhalten (siehe Fig. 3 und Fig. 4 unten). Dies kann durch einen automatischen Dimensionierungsalgorithmus erfolgen. Es können aber auch die Eckpunkte und/oder der Verdrehwinkel des Objekts erhalten werden.

Bei Schritt 170 wird zumindest ein Teil der Industrieanlage basierend auf den Abmessungen 20 der Objekte 22, dem Verdrehwinkel der Objekte 22 und/oder den Eckpunkten der Objekte 22 gesteuert. Beispielsweise wird basierend auf den Abmessungen 20 der Objekte 22 eine Einrichtung zum Bearbeiten eines Objekts 22 wie zum Beispiel ein Teil einer Werkzeugmaschine gesteuert. Es ist aber auch denkbar, dass eine Einrichtung zum Bewegen der Objekte 22 wie z. B. das Förderband 24, ein autonomer Transportroboter und/oder ein Greifarm der Industrieanlage gesteuert wird.

Das Steuern des zumindest einen Teils der Industrieanlage ist aber nicht zwingend. Beispielsweise können die Abmessungen 20, der Verdrehwinkel und/oder die Eckpunkte zu Lager- oder Palletierzwecken abgespeichert werden.

Fig. 5 zeigt ein vereinfachtes Blockschaltbild einer erfindungsgemäßen Vorrichtung 200 zum Erkennen der Abmessung 20 zumindest eines Objekts 22. Die Vorrichtung 200 umfasst eine Kameravorrichtung 240, die in einer Industrieanlage angeordnet ist. Die Kameravorrichtung 240 umfasst eine optische Erfassungseinheit 210, einem Prozessor 220 und einem Speicher 230, die in einem Gehäuse 250 der Kameravorrichtung 240 angeordnet sind.

Die Kameravorrichtung 240 arbeitet auf dem Stereo-Vision-Prinzip. Die optische Erfassungseinheit 210 umfasst daher zwei oder mehr separate Digitalkameras mit jeweils einer Linse und einem Photodetektor (nicht gezeigt). Die optische Erfassungseinheit 210 kann aber auch nur eine Digitalkamera aufweisen.

Der Prozessor 220 ist dazu eingerichtet, computerausführbare Anweisungen auszuführen, die auf dem Speicher 230 gespeichert sind. Die computerausführbaren Anweisungen umfassen zumindest einige, bevorzugt alle Schritte des erfindungsgemäßen Verfahrens 100.

Die Kameravorrichtung 240 umfasst des Weiteren eine Kommunikationseinheit (nicht gezeigt) zum drahtbasierten und/oder drahtlosen Austausch von Daten oder Anweisungen mit einer externen Datenverarbeitungseinrichtung. Die Kommunikationseinheit umfasst z. B. einen Ethernet-Anschluss und/oder einen USB-Anschluss.

Das erfindungsgemäße Verfahren 100 und die erfindungsgemäße Vorrichtung 200 zum Erkennen zumindest einer Abmessung 20 zumindest eines Objekts 22 ermöglichen eine zuverlässige und schnelle Dimensionierung von Objekten 22 in besonders komplizierten oder problematischen Anwendungsfällen.

### Bezugszeichenliste

- 10: 2D-Bild
- 12: Tiefenbild
- 14: Instanz-Segmentierungsmodell
- 16: Segmentierungsmasken
- 18: Punktwolken
- 20: Abmessungen
- 22: Objekte
- 24: Förderband
- 200: Vorrichtung
- 210: optische Erfassungseinheit
- 220: Prozessor
- 230: Speicher
- 240: Kameravorrichtung
- 250: Gehäuse
- L: Länge
- B: Breite

## Patentansprüche

1. Computerimplementiertes Verfahren (100) zum Erkennen zumindest einer Abmessung (20) zumindest eines ersten Objekts (22), das in einer Industrieanlage angeordnet ist, insbesondere in einer Industrieanlage im Logistikbereich, wobei das Verfahren (100) umfasst:
Erzeugen (120) eines 2D-Bildes (10) und eines Tiefenbildes (12) durch zumindest eine Kameravorrichtung (240) der Industrieanlage, wobei das 2D-Bild (10) und das Tiefenbild (12) das erste Objekt (22) und zumindest ein zweites Objekt (22) enthalten;
Anwenden (130) eines Instanz-Segmentierungsmodells (14) auf das 2D-Bild (10), um eine erste Segmentierungsmaske (16) für das erste Objekt (22) und eine zweite Segmentierungsmaske (16) für das zweite Objekt (22) zu generieren, wobei das Instanz-Segmentierungsmodell (14) zumindest ein Convolutional Neural Network umfasst, das zumindest ein erstes Modul und ein zweites Modul umfasst, die miteinander verknüpft sind;
Erhalten (140) zumindest von ersten Tiefeninformationen des ersten Objekts (22) aus dem Tiefenbild (12) unter Verwendung der ersten Segmentierungsmaske (16); und
Erhalten (160) der Abmessung (20) des ersten Objekts (22) basierend auf den ersten Tiefeninformationen.

2. Verfahren (100) nach Anspruch 1,
wobei das erste Objekt (22) und das zweite Objekt (22) nebeneinander angeordnet sind, oder
wobei das erste Objekt (22) zumindest teilweise, bevorzugt vollständig, in dem zweiten Objekt (22) angeordnet ist,
insbesondere wobei das erste Objekt (22) und/oder das zweite Objekt (22) ein Erzeugnis, ein Paket und/oder einen Behälter umfasst.

3. Verfahren (100) nach Anspruch 1 oder 2, ferner umfassend
Erhalten (140) von zweiten Tiefeninformationen des zweiten Objekts (22) aus dem Tiefenbild (12) unter Verwendung der zweiten Segmentierungsmaske (16); und
Erhalten (160) der Abmessung (20) des zweiten Objekts (22) basierend auf den zweiten Tiefeninformationen.

4. Verfahren (100) nach zumindest einem der vorherigen Ansprüche, ferner umfassend:
Extrahieren (150) einer ersten Punktwolke (18) des ersten Objekts (22) aus dem Tiefenbild (12) basierend auf den ersten Tiefeninformationen; und
Erhalten (160) der Abmessung (20) des ersten Objekts (22) aus der ersten Punktwolke (18),
insbesondere wobei das Verfahren (100) ferner umfasst:
Extrahieren (150) einer zweiten Punktwolke (18) des zweiten Objekts (22) aus dem Tiefenbild (12) basierend auf den zweiten Tiefeninformationen; und
Erhalten (160) der Abmessung (20) des zweiten Objekts (22) aus der zweiten Punktwolke (18).

5. Verfahren (100) nach zumindest einem der vorherigen Ansprüche, wobei
das Anwenden (130) des Instanz-Segmentierungsmodells (14) auf das 2D-Bild (10),
das Erhalten (140) der ersten Tiefeninformationen des ersten Objekts (22) aus dem Tiefenbild (12),
insbesondere das Erhalten (140) der zweiten Tiefeninformationen des zweiten Objekts (22) aus dem Tiefenbild (12),
insbesondere das Extrahieren (150) der ersten Punktwolke (18) des ersten Objekts (22) aus dem Tiefenbild,
insbesondere das Extrahieren (150) der zweiten Punktwolke (18) des zweiten Objekts (22) aus dem Tiefenbild (12),
das Erhalten (160) der Abmessung (20) des ersten Objekts (22) basierend auf den ersten Tiefeninformationen,
insbesondere das Erhalten (160) der Abmessung (20) des ersten Objekts (22) aus der ersten Punktwolke (18),
insbesondere das Erhalten (160) der Abmessung (20) des zweiten Objekts (22) basierend auf den zweiten Tiefeninformationen, und/oder
insbesondere das Erhalten (160) der Abmessung (20) des zweiten Objekts (22) aus der zweiten Punktwolke (18),
durch die Kameravorrichtung (240) der Industrieanlage erfolgen.

6. Verfahren (100) nach zumindest einem der vorherigen Ansprüche,
wobei das erste Modul eine Mehrzahl von Merkmalskarten mit unterschiedlichen Detailgraden aus dem 2D-Bild (10) extrahiert, insbesondere unter Verwendung einer Mehrzahl von Faltungsfiltern.

7. Verfahren (100) nach Anspruch 6,
wobei das zweite Modul die Mehrzahl von Merkmalskarten kombiniert, um kombinierte Objektinformationen zu generieren.

8. Verfahren (100) nach Anspruch 7,
wobei das zumindest eine Convolutional Neural Network ferner ein drittes Modul umfasst, das mit dem ersten Modul und dem zweiten Modul verknüpft ist, wobei das dritte Modul die erste Segmentierungsmaske (16) und die zweite Segmentierungsmaske (16) basierend auf der Mehrzahl von Merkmalskarten und den kombinierten Objektinformationen generiert.

9. Verfahren (100) nach zumindest einem der vorherigen Ansprüche,
wobei das erste Modul und/oder das zweite Modul, und/oder insbesondere das dritte Modul, zumindest eine Aktivierungsfunktion umfasst, wobei die Aktivierungsfunktion eine Rectified Linear Unit umfasst, und/oder wobei das zweite Modul, insbesondere und/oder das dritte Modul, 48, 96 und/oder 192 Feature Channels umfasst.

10. Verfahren (100) nach zumindest einem der vorherigen Ansprüche, ferner umfassend das Trainieren (110) des Instanz-Segmentierungsmodells (14) mit einem Trainingsdatensatz, der eine Mehrzahl von Bilder, insbesondere eine Mehrzahl von RGB-Bilder, umfasst, die mit der Kameravorrichtung (240) der Industrieanlage und/oder mit einer in Bezug auf die Kameravorrichtung (240) der Industrieanlage im Wesentlichen baugleiche Kameravorrichtung erzeugt wurden.

11. Verfahren (100) nach Anspruch 10,
wobei die Bilder des Trainingsdatensatzes zumindest ein Paket und/oder zumindest ein Erzeugnis enthalten, das zumindest teilweise, bevorzugt vollständig, in zumindest einem Behälter angeordnet ist, wobei das Paket und/oder das Erzeugnis und der Behälter bevorzugt die gleiche Höhe aufweisen, und/oder
wobei die Bilder des Trainingsdatensatzes zwei oder mehr Pakete und/oder zwei oder mehr Erzeugnisse enthalten, die nebeneinander angeordnet sind, wobei die nebeneinander angeordneten Pakete und/oder Erzeugnisse bevorzugt die gleiche Höhe aufweisen.

12. Verfahren (100) nach Anspruch 10 oder 11,
wobei der Trainingsdatensatz durch einen Datenerweiterungsprozess vergrößert ist, wobei der Datenerweiterungsprozess beinhaltet, dass eines oder mehrere der folgenden Bildbearbeitungsprozesse auf zumindest eines, einen Teil oder alle der Bilder des Trainingsdatensatzes angewandt werden: Ändern der Helligkeit des Bildes, Hinzufügen von Rauschen zu dem Bild, Drehen und/oder Spiegeln des Bildes, Ausschneiden eines Teils eines Bildes und Hinzufügen des Teils zu einem anderen Bild.

13. Verfahren (100) nach zumindest einem der vorherigen Ansprüche,
wobei die Kameravorrichtung (240) das 2D-Bild (10) und das Tiefenbild (12) dadurch erzeugt, dass sie ein Kombinationsbild, insbesondere ein RGBD-Bild, aufnimmt, insbesondere mit einem einzigen Schnappschuss, und das 2D-Bild (10) und das Tiefenbild (12) aus dem Kombinationsbild, insbesondere dem RGBD-Bild, extrahiert.

14. Verfahren (100) nach zumindest einem der vorherigen Ansprüche, ferner umfassend
Steuern (170) zumindest eines Teils der Industrieanlage basierend auf der Abmessung (20) des ersten Objekts (22), insbesondere basierend auf der der Abmessung (20) des ersten Objekts (22) und der Abmessung (20) des zweiten Objekts (22).

15. Vorrichtung (200) zum Erkennen zumindest einer Abmessung (20) zumindest eines ersten Objekts (22), das in einer Industrieanlage angeordnet ist, insbesondere in einer Industrieanlage im Logistikbereich, wobei die Vorrichtung (200) dazu eingerichtet und ausgebildet ist, die folgenden Verfahrensschritte auszuführen:
Erzeugen (120) eines 2D-Bildes (10) und eines Tiefenbildes (12) durch zumindest eine Kameravorrichtung (240) der Vorrichtung (200), wobei das 2D-Bild (10) und das Tiefenbild (12) das erste Objekt (22) und zumindest ein zweites Objekt (22) enthalten;
Anwenden (130) eines Instanz-Segmentierungsmodells (14) auf das 2D-Bild (10), um eine erste Segmentierungsmaske (16) für das erste Objekt (22) und eine zweite Segmentierungsmaske (16) für das zweite Objekt (22) zu generieren;
Erhalten (140) zumindest von ersten Tiefeninformationen des ersten Objekts (22) aus dem Tiefenbild (12) unter Verwendung der ersten Segmentierungsmaske (16); und
Erhalten (160) der Abmessung (20) des ersten Objekts (22) basierend auf den ersten Tiefeninformationen.

## Geänderte Patentansprüche

### Geänderte Patentansprüche gemäss Regel 137(2) EPÜ.

1. Computerimplementiertes Verfahren (100) zum Erkennen zumindest einer Abmessung (20) zumindest eines ersten Objekts (22), das in einer Industrieanlage angeordnet ist, insbesondere in einer Industrieanlage im Logistikbereich, wobei das Verfahren (100) umfasst:
Erzeugen (120) eines 2D-Bildes (10) und eines Tiefenbildes (12) durch zumindest eine Kameravorrichtung (240) der Industrieanlage, wobei das 2D-Bild (10) und das Tiefenbild (12) das erste Objekt (22) und zumindest ein zweites Objekt (22) enthalten;
Anwenden (130) eines Instanz-Segmentierungsmodells (14) auf das 2D-Bild (10), um eine erste Segmentierungsmaske (16) für das erste Objekt (22) und eine zweite Segmentierungsmaske (16) für das zweite Objekt (22) zu generieren, wobei das Instanz-Segmentierungsmodell (14) zumindest ein Convolutional Neural Network umfasst, das zumindest ein erstes Modul und ein zweites Modul umfasst, die miteinander verknüpft sind;
Erhalten (140) zumindest von ersten Tiefeninformationen des ersten Objekts (22) aus dem Tiefenbild (12) unter Verwendung der ersten Segmentierungsmaske (16); und
Erhalten (160) der Abmessung (20) des ersten Objekts (22) basierend auf den ersten Tiefeninformationen,
**dadurch gekennzeichnet, dass**
das Anwenden (130) des Instanz-Segmentierungsmodells (14) auf das 2D-Bild (10), das Erhalten (140) der ersten Tiefeninformationen des ersten Objekts (22) aus dem Tiefenbild (12) und das Erhalten (160) der Abmessung (20) des ersten Objekts (22) basierend auf den ersten Tiefeninformationen durch die Kameravorrichtung (240) der Industrieanlage erfolgen.

2. Verfahren (100) nach Anspruch 1,
wobei das erste Objekt (22) und das zweite Objekt (22) nebeneinander angeordnet sind, oder
wobei das erste Objekt (22) zumindest teilweise, bevorzugt vollständig, in dem zweiten Objekt (22) angeordnet ist,
insbesondere wobei das erste Objekt (22) und/oder das zweite Objekt (22) ein Erzeugnis, ein Paket und/oder einen Behälter umfasst.

3. Verfahren (100) nach Anspruch 1 oder 2, ferner umfassend
Erhalten (140) von zweiten Tiefeninformationen des zweiten Objekts (22) aus dem Tiefenbild (12) unter Verwendung der zweiten Segmentierungsmaske (16); und
Erhalten (160) der Abmessung (20) des zweiten Objekts (22) basierend auf den zweiten Tiefeninformationen.

4. Verfahren (100) nach zumindest einem der vorherigen Ansprüche, ferner umfassend:
Extrahieren (150) einer ersten Punktwolke (18) des ersten Objekts (22) aus dem Tiefenbild (12) basierend auf den ersten Tiefeninformationen; und
Erhalten (160) der Abmessung (20) des ersten Objekts (22) aus der ersten Punktwolke (18),
insbesondere wobei das Verfahren (100) ferner umfasst:
Extrahieren (150) einer zweiten Punktwolke (18) des zweiten Objekts (22) aus dem Tiefenbild (12) basierend auf den zweiten Tiefeninformationen; und
Erhalten (160) der Abmessung (20) des zweiten Objekts (22) aus der zweiten Punktwolke (18).

5. Verfahren (100) nach zumindest einem der vorherigen Ansprüche, wobei
das Erhalten (140) der zweiten Tiefeninformationen des zweiten Objekts (22) aus dem Tiefenbild (12),
insbesondere das Extrahieren (150) der ersten Punktwolke (18) des ersten Objekts (22) aus dem Tiefenbild,
insbesondere das Extrahieren (150) der zweiten Punktwolke (18) des zweiten Objekts (22) aus dem Tiefenbild (12),
insbesondere das Erhalten (160) der Abmessung (20) des ersten Objekts (22) aus der ersten Punktwolke (18),
insbesondere das Erhalten (160) der Abmessung (20) des zweiten Objekts (22) basierend auf den zweiten Tiefeninformationen, und/oder
insbesondere das Erhalten (160) der Abmessung (20) des zweiten Objekts (22) aus der zweiten Punktwolke (18),
durch die Kameravorrichtung (240) der Industrieanlage erfolgen.

6. Verfahren (100) nach zumindest einem der vorherigen Ansprüche, wobei das erste Modul eine Mehrzahl von Merkmalskarten mit unterschiedlichen Detailgraden aus dem 2D-Bild (10) extrahiert, insbesondere unter Verwendung einer Mehrzahl von Faltungsfiltern.

7. Verfahren (100) nach Anspruch 6,
wobei das zweite Modul die Mehrzahl von Merkmalskarten kombiniert, um kombinierte Objektinformationen zu generieren.

8. Verfahren (100) nach Anspruch 7,
wobei das zumindest eine Convolutional Neural Network ferner ein drittes Modul umfasst, das mit dem ersten Modul und dem zweiten Modul verknüpft ist, wobei das dritte Modul die erste Segmentierungsmaske (16) und die zweite Segmentierungsmaske (16) basierend auf der Mehrzahl von Merkmalskarten und den kombinierten Objektinformationen generiert.

9. Verfahren (100) nach zumindest einem der vorherigen Ansprüche, wobei das erste Modul und/oder das zweite Modul, und/oder insbesondere das dritte Modul, zumindest eine Aktivierungsfunktion umfasst, wobei die Aktivierungsfunktion eine Rectified Linear Unit umfasst, und/oder wobei das zweite Modul, insbesondere und/oder das dritte Modul, 48, 96 und/oder 192 Feature Channels umfasst.

10. Verfahren (100) nach zumindest einem der vorherigen Ansprüche, ferner umfassend das Trainieren (110) des Instanz-Segmentierungsmodells (14) mit einem Trainingsdatensatz, der eine Mehrzahl von Bilder, insbesondere eine Mehrzahl von RGB-Bilder, umfasst, die mit der Kameravorrichtung (240) der Industrieanlage und/oder mit einer in Bezug auf die Kameravorrichtung (240) der Industrieanlage im Wesentlichen baugleiche Kameravorrichtung erzeugt wurden.

11. Verfahren (100) nach Anspruch 10,
wobei die Bilder des Trainingsdatensatzes zumindest ein Paket und/oder zumindest ein Erzeugnis enthalten, das zumindest teilweise, bevorzugt vollständig, in zumindest einem Behälter angeordnet ist, wobei das Paket und/oder das Erzeugnis und der Behälter bevorzugt die gleiche Höhe aufweisen, und/oder
wobei die Bilder des Trainingsdatensatzes zwei oder mehr Pakete und/oder zwei oder mehr Erzeugnisse enthalten, die nebeneinander angeordnet sind, wobei die nebeneinander angeordneten Pakete und/oder Erzeugnisse bevorzugt die gleiche Höhe aufweisen.

12. Verfahren (100) nach Anspruch 10 oder 11,
wobei der Trainingsdatensatz durch einen Datenerweiterungsprozess vergrößert ist, wobei der Datenerweiterungsprozess beinhaltet, dass eines oder mehrere der folgenden Bildbearbeitungsprozesse auf zumindest eines, einen Teil oder alle der Bilder des Trainingsdatensatzes angewandt werden: Ändern der Helligkeit des Bildes, Hinzufügen von Rauschen zu dem Bild, Drehen und/oder Spiegeln des Bildes, Ausschneiden eines Teils eines Bildes und Hinzufügen des Teils zu einem anderen Bild.

13. Verfahren (100) nach zumindest einem der vorherigen Ansprüche, wobei die Kameravorrichtung (240) das 2D-Bild (10) und das Tiefenbild (12) dadurch erzeugt, dass sie ein Kombinationsbild, insbesondere ein RGBD-Bild, aufnimmt, insbesondere mit einem einzigen Schnappschuss, und das 2D-Bild (10) und das Tiefenbild (12) aus dem Kombinationsbild, insbesondere dem RGBD-Bild, extrahiert.

14. Verfahren (100) nach zumindest einem der vorherigen Ansprüche, ferner umfassend
Steuern (170) zumindest eines Teils der Industrieanlage basierend auf der Abmessung (20) des ersten Objekts (22), insbesondere basierend auf der der Abmessung (20) des ersten Objekts (22) und der Abmessung (20) des zweiten Objekts (22).

15. Vorrichtung (200) zum Erkennen zumindest einer Abmessung (20) zumindest eines ersten Objekts (22), das in einer Industrieanlage angeordnet ist, insbesondere in einer Industrieanlage im Logistikbereich, wobei die Vorrichtung (200) dazu eingerichtet und ausgebildet ist, die folgenden Verfahrensschritte auszuführen:
Erzeugen (120) eines 2D-Bildes (10) und eines Tiefenbildes (12) durch zumindest eine Kameravorrichtung (240) der Vorrichtung (200), wobei das 2D-Bild (10) und das Tiefenbild (12) das erste Objekt (22) und zumindest ein zweites Objekt (22) enthalten;
Anwenden (130) eines Instanz-Segmentierungsmodells (14) auf das 2D-Bild (10), um eine erste Segmentierungsmaske (16) für das erste Objekt (22) und eine zweite Segmentierungsmaske (16) für das zweite Objekt (22) zu generieren;
Erhalten (140) zumindest von ersten Tiefeninformationen des ersten Objekts (22) aus dem Tiefenbild (12) unter Verwendung der ersten Segmentierungsmaske (16); und
Erhalten (160) der Abmessung (20) des ersten Objekts (22) basierend auf den ersten Tiefeninformationen,
**dadurch gekennzeichnet, dass**
das Anwenden (130) des Instanz-Segmentierungsmodells (14) auf das 2D-Bild (10), das Erhalten (140) der ersten Tiefeninformationen des ersten Objekts (22) aus dem Tiefenbild (12) und das Erhalten (160) der Abmessung (20) des ersten Objekts (22) basierend auf den ersten Tiefeninformationen durch die Kameravorrichtung (240) der Vorrichtung (200) erfolgen.
